# EUROPÄISCHE PATENTANMELDUNG

(11) **EP 4 029 623 A1**
(43) Veröffentlichungstag der Anmeldung: **20.07.2022**
(21) Anmeldenummer: 21214068.5
(22) Anmeldetag: 13.12.2021
(51) Int. Cl.: B21D 39/03, F16B 5/04, F16B 19/10, B21D 22/04, B21D 22/20

(54) **VERFAHREN ZUR VERBINDUNG EINES METALLBLECHS MIT EINER GEGENLAGE**

(30) Priorität: 19.01.2021 DE 102021101057
(71) Anmelder: Teckentrup GmbH & Co. KG, 58849 Herscheid (DE)
(72) Erfinder: Volborth, Thomas, 58553 Halver (DE); Heimer, Michael, 58540 Meinerzhagen (DE); Stumpf, Fabian, 58579 Schalksmühle (DE)
(74) Vertreter: Patentanwälte Dörner & Kötter PartG mbB

(57) **Zusammenfassung**

Die Erfindung betrifft eine Verfahren zur Verbindung eines Metallblechs (1) mit einer Gegenlage (3), wobei zunächst in das Metallblech (1) ein Fügedom (2) tiefgezogen wird, der einen zylindrischen Abschnitt (21) aufweist, an den sich eine Kuppe (22) anschließt und die Gegenlage (3) mit einer Bohrung (4) versehen wird, die einen ersten, zylindrischen Abschnitt (41) und einen zweiten, durchmessererweiterten Abschnitt (42) aufweist, wobei zwischen den beiden Abschnitten (41, 42) ein Absatz (43) gebildet ist, wonach der Fügedom (2) des Metallblechs (1) von der durchmesserreduzierten Seite her durch die Bohrung (4) geführt wird und wonach die Kuppe (22) des Fügedoms (2) derart in der Gegenlage verpresst wird, dass sie innerhalb der Bohrung (4) angeordnet ist, wobei in dem zweiten Abschnitt (42) an dem Absatz (43) anliegend eine Fügewulst (23) gebildet wird, die den Innendurchmesser des ersten, zylindrischen Abschnitts (41) der Bohrung (4) radial überragt. Die Erfindung betrifft weiterhin eine durch ein solches Verfahren erzielbare Verbundanordnung.

## Beschreibung

Die Erfindung betrifft ein Verfahren zur Verbindung eines Metallblechs mit einer Gegenlage nach dem Patentanspruch 1.

Zum Verbinden von Blechen sind unterschiedlichste Fügeprozesse bekannt. Insbesondere dort, wo Formteile aus unterschiedlichen Materialien gefügt werden sollen, werden mechanische Fügeverfahren eingesetzt. Beim Halbhohlstanznieten werden die zu verbindenden Teile mit Hilfe eines schneidenden Stanzniets verbunden. Dabei wird die formschlüssige Verbindung durch einen Hinterschnitt im matrizenseitigen Blech und der Kopfform des Stanznietes im stempelseitigen Blech erzielt. Beim Blindnieten werden die zu verbindenden Formteile zunächst gelocht. Sodann wird mit Hilfe eines Dorns ein Blindniet auf der Blindseite aufgespreizt. In neuerer Zeit hat sich weiterhin das sogenannte Clinchen bewährt. Hierbei handelt es sich um ein Durchsetzfügeverfahren, bei dem Bleche durch Umformung ohne Verwendung eines zusätzlichen Fügemittels verbunden werden. Nachteilig an dem Clinchverfahren ist jedoch, dass hierzu ein Mindestdurchmesser an Fügefläche erforderlich ist. Zudem bewirkt eine Clinchverbindung eine erhebliche Bauteilerhöhung an der Verbindungsstelle.

Der vorliegenden Erfindung liegt die Aufgabe zugrunde, ein Verfahren zur Verbindung eines Metallblechs mit einer Gegenlage bereitzustellen, das keine Fügehilfsmittel erfordert und bei dem keine Bauteilerhöhung an der Fügestellung erfolgt. Gemäß der Erfindung wird diese Aufgabe durch ein Verfahren mit den Merkmalen des Patentanspruchs 1 gelöst.

Mit der Erfindung ist ein Verfahren zur Verbindung eines Metallblechs mit einer Gegenlage bereitgestellt, das keine Fügehilfsmittel erfordert und bei dem keine Bauteilerhöhung an der Verbindungsstelle bewirkt ist. Dadurch, dass zunächst in das Metallblech ein Fügedom tiefgezogen wird, der einen zylindrischen Abschnitt aufweist, an den sich eine kuppelförmige Kuppe anschließt und die Gegenlage mit einer Bohrung versehen wird, die einen ersten zylindrischen Abschnitt und einen zweiten, durchmessererweiterten Abschnitt aufweist, wobei zwischen den beiden Abschnitten ein Absatz gebildet ist, wonach der Fügedom des Metallblechs von der durchmesserreduzierten Seite her durch die Bohrung geführt wird und wonach die Kuppe des Fügedoms derart in der Gegenlage verpresst wird, das sie innerhalb der Bohrung angeordnet ist, wobei in dem zweiten Abschnitt an dem Absatz anliegend ein Fügewulst ausgeformt wird, der den Innendurchmesser des zylindrischen Abschnitts radial überragt, ist eine kraft- und formschlüssige Verbindung zwischen dem Metallblech und der Gegenlage erzielt. Durch die vorzugsweise hohlkugelabschnittsförmige Kuppe wird bei Anliegen einer zentrischen Presskraft ein Materialfluss nach außen in den zweiten, durchmessererweiterten Abschnitt bewirkt, der sich entsprechend der durch den Absatz und die Innenmantelflächen des sich an diesen anschließenden zweiten durchmessererweiterten Abschnitt gebildeten Kontur ausformt. In diesem Zuge wird die Kuppe derart eingedrückt, dass eine vorzugsweise annähernd ebene Oberfläche erzielt wird. Vorteilhaft ist der zweite, durchmessererweiterte Abschnitt zylindrisch ausgebildet.

In Weiterbildung der Erfindung wird der Absatz zumindest bereichsweise zur Innenwandung des zweiten, durchmessererweiterten Abschnitts geneigt ausgebildet. Hierdurch ist ein Hinterschnitt erzielt, wodurch eine Verkeilung der Fügewulst in der Gegenlage bewirkt ist, wodurch signifikant höhere Abzugskräfte erzielt werden.

In Ausgestaltung der Erfindung wird die Kuppe derart in der Gegenlage verpresst, dass ihre Oberfläche nicht über die Oberfläche der Gegenlage hinausragt. Hierdurch ist eine nahezu ebene Kontur der Verbindungsstelle erzielbar.

In Weiterbildung der Erfindung wird der Fügedom auf einem Metallblech mit einer Dehnung von wenigstens 20% und einer Dicke von maximal 4 mm gezogen. Hierdurch ist eine definierte Kontur des Fügedoms erzielbar.

In weiterer Ausgestaltung der Erfindung weist das Metallblech eine Stärke von ≥ 1 mm, bevorzugt ≥2 mm auf. Hierdurch ist eine hinreichend große Materialmenge des ausgeformten Fügedoms zur Ausbildung des Fügewulstes gewährleistet.

Gegenstand der Erfindung ist weiterhin eine Verbundanordnung mit einem Metallblech und einer Gegenlage, insbesondere hergestellt nach dem vorstehenden Verfahren, wobei in das Metallblech ein Fügedom tiefgezogen ist, der durch eine in die Gegenlage eingebrachte Bohrung geführt ist, die einen durchmessererweiterten Bereich aufweist, wobei der Fügedom in die Gegenlage verpresst ist und an dem Absatz zwischen dem ersten zylindrischen Abschnitt und dem zweiten, durchmessererweiterten Abschnitt ein Fügewulst gebildet ist, die den Innendurchmesser des zylindrischen Abschnitts der Bohrung radial überragt. Dabei ist der zweite, durchmessererweiterte Bereich der Bohrung bevorzugt zylindrisch ausgebildet.

In Weiterbildung der Erfindung ist der Absatz zumindest bereichsweise zur Innenwandung des zweiten, durchmessererweiterten Abschnitts geneigt ausgebildet. Die hiermit einhergehende Verkrallung des Fügewulstes in den durch den Absatz gebildeten Hinterschnitt ist die Abzugskraft der gebildeten Verbindung maximiert. Bevorzugt weist das Metallblech eine Dicke von zwischen 1 mm und 4 mm, bevorzugt zwischen 2 mm und 4 mm auf.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eine Metallblechs mit tiefgezogenem Fügedom;
- Figur 2: die schematische Darstellung einer in Form einer karbonfaserverstärkten Kunststoffplatte gebildeten Gegenlage mit einer Bohrung, die auf den Fügedom des Metallblechs aus Figur 1 aufgeschoben ist und
- Figur 3: die schematische Darstellung der Anordnung aus Figur 2 mit verpresstem Fügedom.

Die als Ausführungsbeispiel gewählte Verbundanordnung besteht aus einem Metallblech 1 und einer in Form einer Karbonfaserkunststoffplatte ausgeführten Gegenlage 3, die durch einen in das Metallblech 1 tiefgezogenen Fügedom 2, der durch eine in die Gegenlage 3 eingebrachte Bohrung 4 geführt und in dieser verpresst ist, verbunden ist. Durch die Verpressung des Fügedoms 2 ist eine umlaufende Fügewulst 23 gebildet, die in einem zweiten zylindrischen, durchmessererweiterten Abschnitt 42 angeordnet ist und auf einem Absatz 43 aufliegt, an den sich eine erster, durchmesserreduzierter zylindrischer Abschnitt 31 anschließt. Das Metallblech 1 weist im Ausführungsbeispiel eine Dicke von 3 mm auf. Die Dicke der Gegenlage 3 beträgt 4 mm.

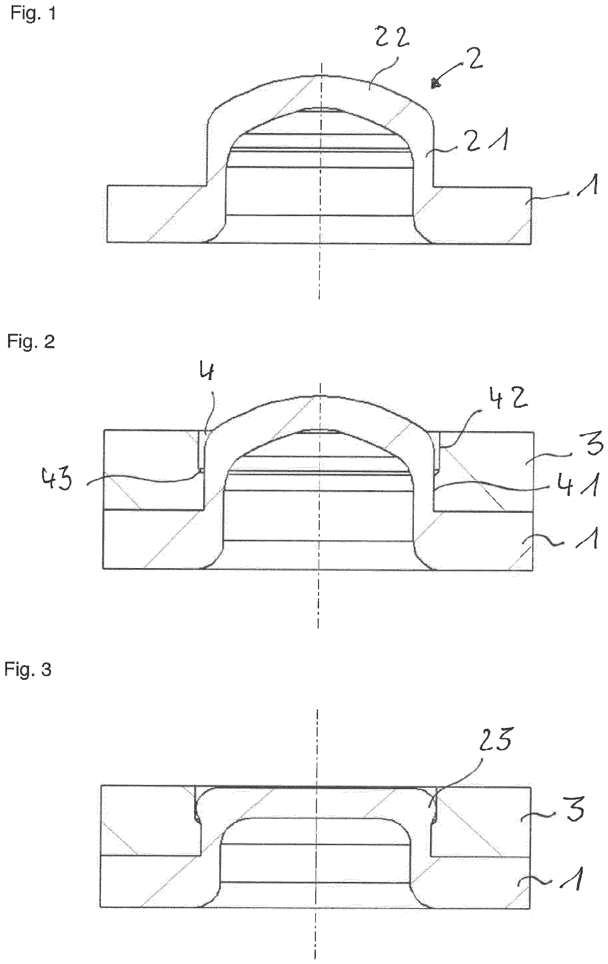

Zur Verbindung des Metallblechs 1 mit der Gegenlage 3 wird zunächst in das Metallblech 1 ein Fügedom 2 tiefgezogen. Der Fügedom 2 weist einen zylindrischen Abschnitt 21 auf, an den sich eine Kuppe 22 anschließt. Das Metallblech 1 wird im Ausführungsbeispiel mit einer Dehnung von 30% gezogen. Wie aus der Darstellung in Figur 1 ersichtlich, weist der zylindrische Abschnitt 21 eine geringere Wandstärke auf, als die Kuppe 22.

Auf das so ausgebildete Metallblech 1 wird eine mit einer Bohrung 4 versehene Gegenlage 3 aufgelegt, wobei der Fügedom 2 des Metallblechs 1 durch die Bohrung 4 geführt wird. Die Bohrung 4 der Gegenlage 3 weist einen ersten, zylindrischen Abschnitt 41 auf, an den sich ein zweiter, durchmessererweiterter Abschnitt 42 anschließt, wobei zwischen den beiden Abschnitten 41, 42 ein Absatz 43 gebildet ist. Im Ausführungsbeispiel gemäß Figur 2 ist der Absatz 43 konisch zum ersten, zylindrischen Abschnitt 31 geneigt ausgeführt. Alternativ kann der Absatz 43 auch waagerecht ausgeführt sein. Eine besondere Abzugskraft der Verbindung kann dadurch erzielt werden, dass der Absatz 33 in Richtung der Innenmantelfläche des zweiten, durchmessererweiterten Abschnitts 42 geneigt ausgeführt wird, wodurch ein Hinterschnitt erzielt wird.

Zur Verbindung des Metallblechs 1 mit der Gegenlage 3 wird nun die Kuppe 22 des Fügedoms 2 in der Gegenlage verpresst. Hierzu wird die Kuppe 22 zentrisch mit einer Presskraft beaufschlagt, wodurch die Kuppe 22 mittig eingedrückt wird, wobei das äußere Material der Kuppe 22 in den zweiten, durchmessererweiterten Abschnitt 42 der Bohrung 4 fließt. Hierdurch wird ein Fügewulst 23 in die von dem Absatz 33 und der Innenmantelfläche des zweiten, durchmessererweiterten Abschnitts 42 gebildeten Kontur gebildet. Die Kuppe 42 des Fügedoms 2 wird soweit verpresst, bis diese eine nahezu ebene Oberfläche aufweist, die mit der Oberfläche der Gegenlage 3 fluchtet (vgl. Figur 3). Es ergibt sich ein pilzförmiger Körper, über den die Gegenlage 3 an dem Metallblech 1 fixiert ist.

Die Fläche der Kuppe des Fügedoms entspricht dem nach dem Verpressen gebildeten Pilzkopf des pilzförmigen Körpers. Der Vorteil dieser konstanten Fläche ist, dass der Korrosionsschutz einer vorhandenen galvanischen Beschichtung des Metallblechs erhalten bleibt. Durch die Verformung des Fügedoms 2 im Zuge der Verpressung in der Gegenlage 3 wird dessen Oberfläche nicht beeinträchtigt - die beschichtete Oberfläche bleibt beim Umformvorgang während der Verpressung unbeschädigt. Die resultierende Fläche des Pilzkopfes ist durch die Form und Winkelstellung der Kuppe einstellbar.

## Patentansprüche

1. Verfahren zur Verbindung eines Metallblechs (1) mit einer Gegenlage (3), wobei zunächst in das Metallblech (1) ein Fügedom (2) tiefgezogen wird, der einen zylindrischen Abschnitt (21) aufweist, an den sich eine Kuppe (22) anschließt und die Gegenlage (3) mit einer Bohrung (4) versehen wird, die einen ersten, zylindrischen Abschnitt (41) und einen zweiten, durchmessererweiterten Abschnitt (42) aufweist, wobei zwischen den beiden Abschnitten (41, 42) ein Absatz (43) gebildet ist, wonach der Fügedom (2) des Metallblechs (1) von der durchmesserreduzierten Seite her durch die Bohrung (4) geführt wird und wonach die Kuppe (22) des Fügedoms (2) derart in der Gegenlage verpresst wird, dass sie innerhalb der Bohrung (4) angeordnet ist, wobei in dem zweiten Abschnitt (42) an dem Absatz (43) anliegend eine Fügewulst (23) gebildet wird, die den Innendurchmesser des ersten, zylindrischen Abschnitts (41) der Bohrung (4) radial überragt.

2. Verfahren nach Anspruch 1, **dadurch gekennzeichnet, dass** durch das Verpressen der Kuppe (22) ein die Fügewulst (23) aufweisender pilzförmiger Körper gebildet wird, wobei die Oberfläche des Pilzkopfes des pilzförmigen Körpers der Oberfläche der Kuppe (22) entspricht.

3. Verfahren nach Anspruch 1 oder 2, **dadurch gekennzeichnet, dass** der erste zylindrische Abschnitt 21 des Fügedoms (2) eine geringere Wandstärke aufweist, als die Kuppe (22).

4. Verfahren nach einem der vorgenannten Ansprüche, **dadurch gekennzeichnet, dass** die Kuppe (22) hohlkugelabschnittsförmig ausgebildet ist.

5. Verfahren nach einem der vorgenannten Ansprüche, **dadurch gekennzeichnet, dass** der zweite, durchmessererweiterte Abschnitt (42) der Bohrung (4) zylindrisch ausgebildet wird.

6. Verfahren nach einem der vorgenannten Ansprüche, **dadurch gekennzeichnet, dass** der Absatz (43) der Bohrung (4) zumindest bereichsweise zur Innenwandung des zweiten, durchmessererweiterten Abschnitts (42) geneigt ausgebildet wird.

7. Verfahren nach einem der vorgenannten Ansprüche, **dadurch gekennzeichnet, dass** die Kuppe (22) derart in der Gegenlage (3) verpresst wird, dass ihre Oberfläche nicht über die Oberfläche der Gegenlage (3) hinausragt.

8. Verfahren nach einem der vorgenannten Ansprüche, **dadurch gekennzeichnet, dass** der Fügedom (2) aus einem Metallblech (1) mit einer Dehnung von wenigstens 20 % und einer Dicke von maximal 4 mm gezogen wird.

9. Verfahren nach einem der vorgenannten Ansprüche, **dadurch gekennzeichnet, dass** das Metallblech (1) eine Stärke von größer 1 mm, bevorzugt größer 2 mm aufweist.

10. Verbundanordnung mit einem Metallblech und einer Gegenlage, wobei in das Metallblech (1) ein Fügedom (2) tiefgezogen ist, der durch eine in die Gegenlage (3) eingebrachte Bohrung (4) geführt ist, die einen ersten, zylindrischen Abschnitt (41) und einen zweiten, durchmesserweiterten Abschnitt (42) aufweist, wobei der Fügedom (2) in die Gegenlage (3) verpresst ist und einen umlaufenden Fügewulst (23) aufweist, der an dem Absatz (43) zwischen dem ersten, zylindrischen Abschnitt (41) und dem zweiten, durchmessererweiterten Abschnitt (42) anliegt und der den Innendurchmesser des ersten, zylindrischen Abschnitts (41) der Bohrung (4) radial überragt.

11. Verbundanordnung nach Anspruch 10, **dadurch gekennzeichnet, dass** der zweite, durchmessererweiterte Abschnitt (42) der Bohrung (4) zylindrisch ausgebildet ist.

12. Verbundanordnung nach Anspruch 10 oder 11, **dadurch gekennzeichnet, dass** der Absatz (43) der Bohrung (4) zumindest bereichsweise zur Innenwandung des zweiten, durchmessererweiterten Abschnitts (42) geneigt ausgebildet ist.

13. Verbundanordnung nach einem der Ansprüche 10 bis 12, **dadurch gekennzeichnet, dass** das Metallblech (1) eine Dicke von zwischen 1 mm und 4 mm, bevorzugt zwischen 2 mm und 4 mm aufweist.
